(19) Europäisches Patentamt
European Patent Office
Office européen des brevets

(11) Veröffentlichungsnummer: **0 050 261**
**B1**

(12) # EUROPÄISCHE PATENTSCHRIFT

(45) Veröffentlichungstag der Patentschrift: **14.08.85**

(51) Int. Cl.⁴: **C 08 L 55/02**, C 08 K 5/37

(21) Anmeldenummer: **81107954.0**

(22) Anmeldetag: **06.10.81**

(54) **Gegen Thermolyse stabilisierte Formmassen mit geringem Monomerengehalt.**

(30) Priorität: **17.10.80 DE 3039268**

(43) Veröffentlichungstag der Anmeldung: **28.04.82 Patentblatt 82/17**

(45) Bekanntmachung des Hinweises auf die Patenterteilung: **14.08.85 Patentblatt 85/33**

(84) Benannte Vertragsstaaten: **BE DE FR GB IT NL**

(56) Entgegenhaltungen:
**EP - A - 0 017 614**
**FR - A - 2 279 810**
**FR - A - 2 289 534**

**PATENTS ABSTRACTS OF JAPAN, Band 1, Nr. 17, 23. März 1977, Seite 928C76**

(73) Patentinhaber: **BAYER AG, Konzernverwaltung RP Patentabteilung, D-5090 Leverkusen 1 Bayerwerk (DE)**

(72) Erfinder: **Buysch, Hans-Josef, Dr., Brandenburger Strasse 28, D-4150 Krefeld (DE)**
Erfinder: **Pischtschan, Alfred, Dr., Zur Eiche 33, D-5067 Kürten (DE)**
Erfinder: **Humme, Gert, Dr., Ackerstrasse 17, D-5068 Odenthal (DE)**
Erfinder: **Ott, Karl-Heinz, Dr., Paul-Klee-Strasse 54, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung hat Formmassen zum Gegenstand, die sich durch geringen Monomerengehalt auszeichnen und die Stabilisatoren gegen thermolytischen Abbau enthalten.

Thermoplastische Formmassen, die Styrol (oder α-Methylstyrol) und Acrylnitril in polymerisierter Form enthalten, sind bekannt. Dazu gehören beispielsweise Copolymerisate von Styrol und Acrylnitril («SAN-Harze») und Pfropfpolymerisate von Styrol, Acrylnitril und/oder anderen olefinisch ungesättigten Monomeren auf einem Kautschuk, z.B. einem Dienkautschuk.

Diese Formmassen lassen sich nach verschiedenen Polymerisationsverfahren erzeugen. Man kann ihren Gehalt an nicht polymerisierten Monomeren (Restmonomeren) sehr niedrig halten, aber bei der Weiterverarbeitung zu Formkörpern durch Spritzung oder Extrusion kann wegen der erforderlichen hohen Temperaturen durch thermischen Abbau der Formmassen Monomer zurückgebildet werden. Diese Thermolyse kann unter ungünstigen Verhältnissen je nach Temperatur und Verweilzeit in den heissen Zonen der Verarbeitungsmaschinen beträchtlich sein. Sehr hohe Verarbeitungstemperaturen, die die Thermolyse begünstigen, sind erforderlich für die Herstellung besonders dünnwandiger und grossflächiger Formteile.

Es besteht somit ein Bedürfnis, die Thermolyseneigung zu vermindern.

Man hat vorgeschlagen, die Monomergehalte von Formmassen der oben beschriebenen Art durch Zusetzen von Arylsulfonylhydraziden zu senken.

Nach GB-PS 1 535 344 sollen so jedoch Restmonomere entfernt werden, die bei der Homo- und Copolymerisation des Styrols im Polymerisat verblieben sind. Die Sulfonsäurehydrazide werden bei verhältnismässig niedrigen Temperaturen von maximal 220 °C eingearbeitet. Dies ist erforderlich, damit sich die Hydrazide im Polymerisat homogen verteilen und wirksam werden, bevor sie sich völlig zersetzt haben. Eine Stabilisierung der Formmassen gegen Thermolyse bei der Verarbeitung – im allgemeinen bei 240–280 °C – kann daher nicht erwartet werden. Mit Hydraziden ausgerüstete Formmassen setzen während der thermoplastischen Verarbeitung gasförmige Stoffe frei. Dadurch entstehen sogenannte Silberschlieren auf den Oberflächen der Formteile; im allgemeinen sind solche Formteile unbrauchbar.

Gegenstand der Erfindung sind gegen thermolytischen Abbau stabilisierte thermoplastische Formmassen mit geringen Restmonomergehalten auf der Basis von Acrylnitril, Styrol (oder α-Methylstyrol) und Kautschuken, die gekennzeichnet sind durch einen Gehalt von 0,01 bis 10 Gew.-% (bezogen auf Gesamtmischung) von Verbindungen, ausgewählt aus $C_1$–$C_{18}$-Alkylmercaptan, araliphatischen Mercaptanen, aromatischen Mercaptanen, heterocyclischen Mercaptanen, Thiocarbonsäuren, sowie Additionsprodukten von Episulfiden an Polyole, Polyphenole oder aliphatische Amine.

Erfindungsgemäss ausgerüstete Formmassen enthalten im allgemeinen erheblich weniger Monomere als vergleichbare nicht ausgerüstete Formmassen, d.h. die erfindungsgemässen Zusätze wirken nicht nur dem thermischen Abbau entgegen, sondern auch im Sinne einer Reinigung der Polymerisate von Monomeren, die von der Herstellung her noch in ihnen vorhanden sind.

Besonders geeignete Formmassen im Sinne der Erfindung sind z.B. Polymerisate aus Styrol (gegebenenfalls α-Methylstyrol) und Acrylnitril und Pfropfpolymerisate auf 1,3-Dien-Kautschuk.

Hierzu gehören z.B. Styrol-Acrylnitril-Copolymerisate, schlagfeste Polystyrole, ABS-Polymerisate und ähnlich aufgebaute Zweiphasenkunststoffe vom z.B. ASA- oder AES-Typ, weiterhin auch Polymerlegierungen, die Anteile an den genannten Polymeren enthalten.

Bevorzugte ABS-Polymere sind solche aus

1. 25 bis 100 Gew.-% eines Pfropfmischpolymerisats aus einem auf einen
   - 1.1. Kautschuk polymerisierten
   - 1.2. Monomerengemisch aus
     - 1.2.1. 95 bis 50 Gew.-% Styrol, α-Methylstyrol oder Mischungen daraus
     - 1.2.2. 50 bis 5 Gew.-% Acrylnitril, Methylmethacrylat oder Mischungen daraus, und
2. 75 bis 0 Gew.-% eines Copolymerisats von
   - 2.1. 95 bis 50 Gew.-% Styrol oder α-Methylstyrol, oder Mischungen daraus,
   - 2.2. 50 bis 5 Gew.-% Acrylnitril, Methacrylnitril, Methylmethacrylat oder Mischungen daraus.

Geeignete Kautschuke sind z.B. Dienkautschuke wie Homopolymerisate des Butadiens und Isoprens oder deren Copolymerisate mit bis zu 20 Gew.-% Styrol. Weiter geeignet sind Ethylen-Propylen-Terpolymerisate (EPDM-Kautschuke). Diese Produkte sind aufgebaut aus Ethylen- und Propyleneinheiten im Verhältnis 20:80 bis 80:20 und enthalten als dritte Komponente ein nicht konjugiertes Dien. Diese dritte Komponente ist in Mengen bis zu 15 Gew.-% vorhanden. Bevorzugt besteht sie aus Norbornadien, Hexadien-1,5 oder Ethylidennorbornen.

Durch Mischen der EPDM-Kautschuke mit Copolymerisat entsprechend 2. erhält man sogenannte AES-Polymere, die sich gegenüber ABS-Kunststoffen durch verbessertes Witterungsverhalten auszeichnen. Zum gleichen Zweck kann man auch vernetzte Acrylatkautschuke als Pfropfgrundlagen verwenden und erhält dann nach Mischen mit Copolymerisat entsprechend 2. die bekannten ASA-Polymeren. Zur Herstellung der Acrylatkautschuke geeignete Monomere sind beispielsweise Acrylsäurealkyl ($C_1$ bis $C_8$)-ester, von denen Acrylsäurebutylester bevorzugt wird.

Bei der Pfropfpolymerisation des angeführten Monomerengemisches auf den Kautschuk pfropfpolymerisiert man in der Regel 20 bis 100% der vorhandenen Monomeren. Der Rest wird für sich copolymerisiert.

ABS-Pfropfcopolymerisate sind nach üblichen Techniken herstellbar, beispielsweise gemäss den Angaben der deutschen Auslegeschriften 1 247 665 und 1 269 360 durch Emulsionspolymerisation.

Geeignete Substanzen, die erfindungsgemäss den oben aufgeführten Polymeren zuzusetzen sind, sind Alkali- und Erdalkalihydrogensulfide, wie NaSH, KSH, $Ca(SH)_2$ und $Mg(SH)_2$, $C_1$–$C_{18}$-Alkylmercaptane mit einer oder mehreren SH-Gruppen, wobei die Alkylreste geradkettig, verzweigt oder alicyclisch ($C_5$–$C_{12}$-Alicyclen) sein können. Im einzelnen zu nennen sind beispielsweise Dodecylmercaptan, Stearylmercaptan, Ethan-1,2-dithiol, Hexan-1,6-dithiol, β-Hydroxyethanthiol, β-Amino-ethanthiol, 2,3-Dimercaptopropanol, 2,3-Dimercaptopropylamin, 1,3-Dimercaptoaceton, Additionsprodukte von Schwefelwasserstoff an diverse Olefine wie Limonen, Dipenten, Ölsäure, Linolensäuremethylester, Dicyclopentadien, Vinylcyclohexen, Additionsprodukte von Episulfiden an Polyole, z.B.

$$HOCH_2CH_2–O–CH_2CH_2–O–CH_2CH_2–SH$$

$$HSCH_2CH_2(SCH_2CH_2)_xO(CH_2)_6O–(CH_2CH_2S)_yCH_2CH_2SH$$

oder an Polyphenole, z.B.

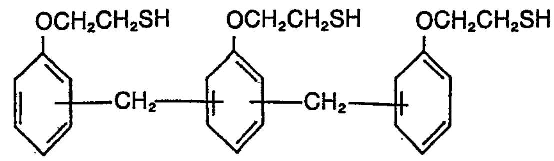
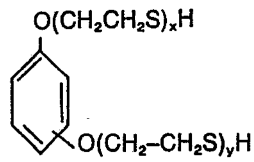

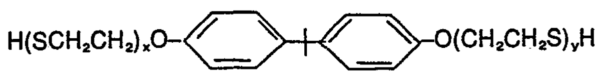

x und y = 1 bis 10,

oder an aliphatische Amine, z.B.

$$(HSCH_2CH_2)_2N(CH_2)_6N(CH_2CH_2SH)_2$$

$$HSCH_2CH_2NHCH_2CH_2NHCH_2CH_2NHCH_2CH_2SH$$

$$(HSCH_2CH_2)_3N$$

oder

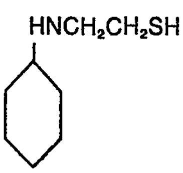

ferner Thiocarbonsäuren, Thioessigsäure, Thiobuttersäure, Dithioadipinsäure, Dithioazelainsäure, Thiostearinsäure, Thiobenzoesäure, Thioglykolsäure, β-Mercapto-thiopropionsäure, α-Amino-thioessigsäure, p-Mercaptothiobenzoesäure und deren Amide wie Thioacetamid und Thio-N-methylbenzamid,
weiter araliphatische Mercaptane wie Benzylmercaptan, 4-Hydroxy-3,5-dimethylbenzylmercaptan, 4-Hydroxy-3,5-di-tert.-butylbenzoyl-mercaptan, o-Xylylenbismercaptan, p-Xylylenbismercaptan, β-Mercaptoethylbenzol, α-Mercapto-ethylbenzol, α-Mercapto-isopropylbenzol, α,α'-Bis-mercaptodiisopropylbenzol, p-Mercaptomethylbenzoesäure-β-mercapto-ethylester, α-Mercaptohydrozimtsäure,
dann aromatische Mercaptane wie Thiophenol, p-Hydroxythiophenol, p-Methoxythiophenol, Thiokresol, Thioxylenol, 2-Mercaptoanilin, 4-Mercapto-benzoesäure-β-mercaptoethylester, 2-Hydroxy-3-tert.-butyl-5-methyl-thiophenol, 4-Hydroxy-3,5-dimethyl-thiophenol, 3,5-Dichlorthiosalicylsäure, 4-Chlor-thiophenol, Isononylthiophenol, 3,5-Dimercapto-4-hydroxy-toluol, 2,4-Dimercaptoethylbenzol, 2,5-Dichlorbenzol-1,3-dithiol, 1,4-Bismercaptobenzol, mehrkernige aromatische Mercaptane wie Thionaphthol, Naphthalin-1,5-dithiol

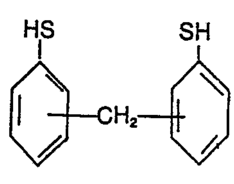
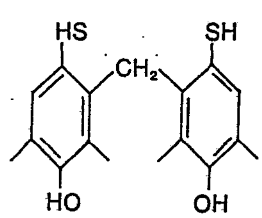
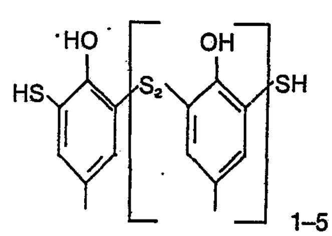

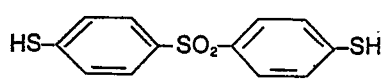

Biphenyl-4,4'-dithiol, Diphenylether-4,4'-dithiol.

Heterocyclische Mercaptoverbindungen, besonders solche von 5- und 6-gliedrigen O-, N- und S-Heterocyclen wie 4-Mercaptopyridin, 3-Mercapto-pyridin-4-carbonsäureamid, 2,4-Dimercaptonicotinsäure, 4-Mercaptochinolin, 2-Mercapto-4-oxathiazolidin, 3-Mercaptothiophen, 3,4-Dimercaptothiophen, 3,5-Dimercapto-1,2,4-thiadiazol, 3-Phenyl-5-mercapto-1,2,4-thiadiazolin, 5-Aminophenyl-2-mercapto-1,3,4-thiadiazol, 2-Mercaptoimidazol, 2-Mercapto-3-benzyl-imidazol, 1-Phenyl-3-methyl-4-mercaptopyrazolinon-5, 1-Methyl-2-mercapto-3-phenyl-indol, 2-Phenyl-3-mercaptoindol, 2-Amino-5-mercapto-pyrimidin, 2-Hydroxy-4-amino-6-mercapto-pyrimidin, 2-Mercapto-4-carboxy-6-hydroxy-pyrimidin, 2,6-Dimercaptopyrimidin, 2,4-Dimethoxy-6-mercapto-s-triazin, 2,4-Dimercapto-6-ethoxy-s-triazin und Ammoniumsalze aller dieser Mercaptoverbindungen, wobei als Amine primäre, sekundäre und tertiäre aliphatische Amine eingesetzt werden können.

Beispiele für geeignete Amine sind z. B. Butylamin, Benzylamin, Stearylamin, 1,6-Diaminohexan, Isophorondiamin, Ethylendiamin, Dibutylamin, Dicyclohexylamin, Dibenzylamin, Diethylentriamin, Triethanolamin, Dimethylaminoethanol, Triethylamin, N,N-Dimethylstearylamin, Dimethylbenzylamin, Dimethylcyclohexylamin.

Die genannten Verbindungen sind nach bekannten Verfahren zugänglich (Houben-Weyl, Methoden d. Org. Chemie, Bd. 9, 4. Aufl. 1955, The Chemistry of Heterocyclic Compounds, a series of monographs by A. Weissberger und E.C. Taylor, Wiley-Interscience, 1950, Heterocyclic Compounds by R.C. Elderfield, John Wiley a. sons, 1950).

Die genannten Verbindungen werden in Mengen von 0,01–10 Gew.-%, vorzugsweise 0,1–8 Gew.-%, besonders 0,2–5 Gew.-%, bezogen auf das Gewicht der Formmassen, eingesetzt. Die Einarbeitung kann nach den üblichen Methoden erfolgen. So können die erfindungsgemäss zu verwendenden Substanzen dem Latex zugegeben werden, sie können aber auch in irgendeinen Compoundierungsvorgang eingeschleust oder unmittelbar vor der Spritzguss- oder Extrusionsverarbeitung zugesetzt werden. Sie können als solche oder im Gemisch mit anderen Zuschlägen oder auch in Lösung zudosiert werden.

Neben den erfindungsgemäss zuzusetzenden Substanzen können wie üblich Antioxidantien, Gleitmittel, Verstärkungsmittel, UV-Absorber, Lichtschutzmittel, Entformungsmittel, Farbstoffe, Pigmente und Füllstoffe, Flammschutzmittel, Zähigkeitsverbesserer, Antistatika mitverwendet werden.

Untersuchungsmethodik

Die verwendeten ABS-Polymeren entsprechen typischen Vertretern bekannter Sortimente. Sie werden in den Beispielen entsprechend ihrer Verarbeitungs- und Eigenschaftsklasse allgemein und durch Angabe des Monomerenverhältnisses und des mittleren Molekulargewichts ihrer thermoplastischen Harzkomponenten näher charakterisiert.

Hierbei bedeuten:

| | |
|---|---|
| A oder ACN: | Acrylnitril |
| B: | Butadien |
| S oder STY: | Styrol |
| AMS: | α-Methylstyrol |

Alle Angaben in Gewichtsprozent.

MG: Molekulargewicht*.

Die Herstellung der untersuchten Compounds, ohne und mit Zusatz der erfindungsgemässen Thermolysestabilisatoren, erfolgte im allgemeinen auf einem 3 kg-Laborinnenkneter vom Banbury-Typ. Entsprechend den relativ niedrigen Massetemperaturen erfolgt hierbei praktisch keine Rückspaltung. Übergang auf grosstechnische Produktion veränderte daran nichts (das Compound des Beispiels 7 wurde unter Produktionsbedingungen hergestellt).

Als Verarbeitungsschritt wurde das Spritzgiessen von Musterplättchen der Dimension 60 × 40 × 2 (mm) gewählt. Ausgehend von einem Knetercompound konnten hierbei jeweils schonend und unter hoher thermischer Beanspruchung Formteile für die nachfolgende analytische Monomerenbestimmung gewonnen werden.

Das Thermolyseverhalten der heissen ABS-Schmelze wird im wesentlichen von der Temperatur beeinflusst. Veränderungen der Zykluszeiten führten nicht zu wesentlich anderen Monomerengehalten. Auch der Übergang auf grössere Formteile von z.B. mehreren hundert Gramm Gewicht änderte nichts am Thermolyseverhalten, sofern die Massetemperaturen vergleichbar waren.

Spritzgussmaschine für die Musterplättchen: Monomat 25, Eckert & Ziegler.

Die Bestimmung der Monomeren erfolgte nach bekannten Verfahren:

Styrol und α-Methylstyrol gaschromatographisch nach DIN 53 741 (Entwurf Dezember 1969), Acrylnitril durch Dampfraum-Gaschromatographie unter Verwendung eines thermoionischen Stickstoff-Detektors; Veröffentlichung der Methode in 39. Mitt. Bundesgesundhbl. 20 (1977) Nr. 12.

Beispiele:

Beispiel 1

Granulat eines ABS-Typs mit hoher Wärmeformbeständigkeit (A:B:S:AMS = 26:13:9:52; mittleres MG des Copolymerisats aus Acrylnitril und α-Methylstyrol 70 000–110 000) wird bei 220 und 280 °C im 19-sec.-Zyklus zu Musterplättchen verspritzt. Das gleiche erfolgt nach Ausrüstung mit verschiedenen Thermolysestabilisatoren. Die folgende Tabelle I gibt eine Übersicht über das Versuchsergebnis.

---

* $\overline{M}_\eta$, Viskositätsmittel aus [η]-M-Beziehung; H. BAUMANN, H. LANGE; Angew. Makromol. Chem. 9 (1969) 16–34.

Tabelle I

| Thermolyse-Stabilisator | Gew.-% Menge | 220 °C ACN ppm | STY ppm | 280 °C ACN ppm | STY ppm |
|---|---|---|---|---|---|
| ohne | – | 57–54 | 760 | 260–280 | 700 |
| 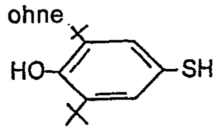 | 1,2 | 8–7 | 300 | 21–20 | 300 |
| 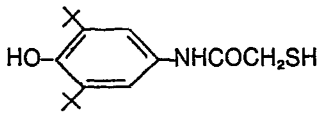 | 1,5 | 17 | 500 | 48 | 500 |
| 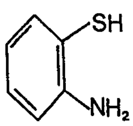 | 0,4 | 38 | 520 | 50 | 490 |
| | 0,7 | 34 | 380 | 45 | 380 |
| 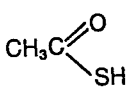 | 0,2 | 41 | 620 | 120 | 550 |
| | 0,4 | 29 | 580 | 52 | 500 |
| $CH_3(CH_2)_{11}SH$ | 0,5 | 44 | 600 | 110 | 600 |
| | 1,0 | 38 | 540 | 85 | 590 |

Beispiel 2

Granulat eines Standard-ABS-Typs mit guter Verarbeitbarkeit und mittlerem Werteniveau (A:B:S = 23:13:64; mittleres MG des Styrolacrylnitrilcopolymerisats 110 000–160 000; antistatisch ausgerüstet) wird mit und ohne Thermolysestabilisator bei 220 und 280 °C im 19-sec.-Zyklus zu Musterplättchen verspritzt.

Ergebnisse sind der folgenden Tabelle II zu entnehmen:

Tabelle II

| Thermolyse-Stabilisator | Menge Gew.-% | 220 °C ACN ppm | 280 °C ACN ppm |
|---|---|---|---|
| – | – | 5 | 60 |
| 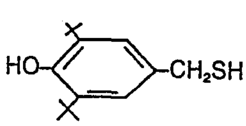 | 1,0 | 4 | 12 |

analog mit einem ABS-Granulat vom Typus des Beispiels Nr. 1, orange eingefärbt verfahren. Ergebnis in Tabelle III:

Tabelle III

| Thermolyse-Stabilisator | Menge Gew.-% | 220 °C ACN ppm | 280 °C ACN ppm |
|---|---|---|---|
| – | – | 39 | 800 |
| 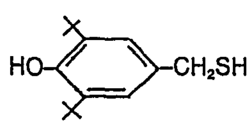 | 1,0 | 20 | 125 |

Beispiel 3

Ein ABS-Granulat vom hochwärmeformbeständigen Typ des Beispiels Nr. 1, weiss pigmentiert, wird mit und ohne Thermolysestabilisator bei 220 und 280 °C verspritzt.

Das Ergebnis findet sich in der folgenden Tabelle IV:

Tabelle IV

| Thermolyse-Stabilisator | % Gew. | Monomeren ppm | 220 °C | 280 °C |
|---|---|---|---|---|
| – | – | ACN | 33 | 160 |
| | | STY | 990 | 900 |
| | | AMS | 1310 | 1970 |
| 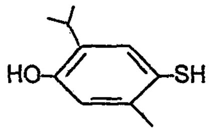 | 0,5 | ACN | 13 | 27 |
| | | STY | 500 | 460 |
| | | AMS | 590 | 520 |

Beispiel 4

Ein ABS-Granulat vom Typ des Beispiels Nr. 1 wird mit 2,0 Gew.-% Titandioxid- bzw. Cadmiumsulfidpigment und mit und ohne Thermolysestabilisator

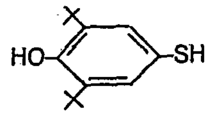

bei 220 und 280 °C zu Musterplättchen verspritzt. Das Ergebnis zeigt folgende Tabelle V:

Tabelle V

| Zuschläge | Monomere ppm | 220 °C | 280 °C |
|---|---|---|---|
| 2,0% Titandioxid ohne Stab. | ACN | 74 | 280 |
| | STY | 730 | 700 |
| | AMS | 1650 | 2210 |
| 2,0% Titandioxid 0,5% Stab. | ACN | 68 | 83 |
| | STY | 610 | 540 |
| | AMS | 970 | 1370 |
| 2,0% Titandioxid 1,0% Stab. | ACN | 52 | 53 |
| | STY | 450 | 460 |
| | AMS | 900 | 930 |
| 2,0% Cadmiumsulfid 0,5% Stab. | ACN | 48 | 64 |
| | STY | 600 | 580 |
| | AMS | 1000 | 1200 |

Beispiel 5

Granulat eines Standard-ABS-Typs wie in Beispiel 2 wird mit und ohne Thermolysestabilisator bei 220 °C und 280 °C im 19 sec.-Zyklus zu Musterplättchen verspritzt. Ergebnisse sind der folgenden Tabelle VI zu entnehmen:

Tabelle VI

| Thermostab. | Gew.-% | 220 °C ACN ppm | STY ppm | ANS ppm | 280 °C ACN ppm | STY ppm | AMS ppm |
|---|---|---|---|---|---|---|---|
| – | – | 18 | 1560 | 750 | 240 | 1230 | 1760 |
| 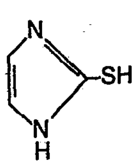 | 0,6 | 16 | 1480 | 700 | 84 | 1180 | 1230 |

Tabelle VI (Fortsetzung)

| Thermostab. | Gew.-% | 220°C ACN ppm | STY ppm | ANS ppm | 280°C ACN ppm | STY ppm | AMS ppm |
|---|---|---|---|---|---|---|---|
| 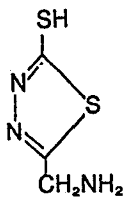 | 0,7 | 9 | 610 | 220 | 12 | 870 | 410 |
| 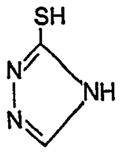 | 0,6 | 15 | 1400 | 600 | 70 | 1020 | 960 |

Vergleichsbeispiel

Ein ABS-Granulat eines Standardtyps wie im Beispiel 2 und des hochwärmeformbeständigen Typs wie im Beispiel 1 wurden je mit und ohne Zusatz von Arylsulfonsäurehydrazid entsprechend Brit. PS 1 535 344 bei 220 und 280 °C im 19 sec.-Zyklus zu Musterplättchen verspritzt.

Das Ergebnis der Monomerenanalyse zeigt Tabelle VII. Ausser in den beiden Versuchen ohne Hydrazid traten sehr stark Silberschlieren auf.

Tabelle VII

| ABS-Typ und Hydrazid | Monomere ppm | 220°C | 280°C |
|---|---|---|---|
| Standardtyp ohne Hydrazid | ACN<br>STY | 7<br>3200 | 19<br>2800 |
| " + 0,5% 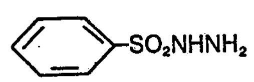 | ACN<br>STY | 5<br>2500 | 17<br>2300 |
| " + 0,5% 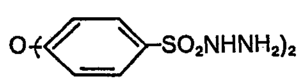 | ACN<br>STY | 5<br>2500 | 16<br>2100 |
| hochwärmeformbeständiger Typ ohne Hydrazid | ACN<br>STY | 48<br>500 | 300<br>500 |
| " mit 0,5% 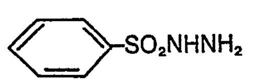 | ACN<br>STY | 25<br>400 | 190<br>350 |
| " mit 0,5% 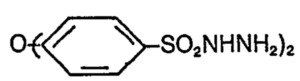 | ACN<br>STY | 27<br>400 | 190<br>400 |

**Patentansprüche**

1. Gegen thermolytischen Abbau stabilisierte thermoplastische Formmassen mit geringen Restmonomergehalten auf der Basis von Acrylnitril, Styrol (oder α-Methylstyrol) und Kautschuken, gekennzeichnet durch einen Gehalt von 0,01 bis 10 Gew.-% (bezogen auf Gesamtgewicht) von Verbindungen, ausgewählt aus Alkylmercaptan, araliphatischen Mercaptanen, aromatischen Mercaptanen, heterocyclischen Mercaptanen, Thiocarbonsäuren, sowie Additionsprodukten von Episulfiden an Polyole, Polyphenole oder aliphatische Amine, jeweils mit 1 bis 18 C-Atomen pro SH-Gruppe.

2. Formmassen nach Anspruch 1, dadurch gekennzeichnet, dass sie aliphatische Monomercaptane mit 1 bis 18 C-Atomen enthalten.

3. Formmassen nach Anspruch 1, dadurch gekennzeichnet, dass sie ein- oder mehrwertige Thiocarbonsäuren mit 2 bis 18 C-Atomen pro SH-Gruppe, deren Ammoniumsalze oder Amide enthalten.

4. Formmassen nach Anspruch 1, dadurch gekennzeichnet, dass sie araliphatische Mercaptane mit einer oder mehreren SH-Gruppen und 2 bis 18 C-Atome pro SH-Gruppe oder deren Ammoniumsalze enthalten.

5. Formmassen nach Anspruch 1, dadurch gekennzeichnet, dass sie ein- oder mehrkernige aromatische Mercaptane mit einer oder mehreren SH-Gruppen enthalten.

**Claims**

1. Thermoplastic moulding compositions stabilised against thermolytic degradation and having small residual monomer contents, based on acrylonitrile, styrene (or α-methylstyrene) and rubbers, characterised by a content of 0.01 to 10% by weight (based on the total weight) of compounds selected from alkyl mercaptan, araliphatic mercaptans, aromatic mercaptans, heterocyclic mercaptans, thiocarboxylic acids and addition products of episulphides with polyols, polyphenols or aliphatic amines, in each case having 1 to 18 C atoms per SH group.

2. Moulding compositions according to Claim 1, characterised in that they contain aliphatic monomercaptans with 1 to 18 C atoms.

3. Moulding compositions according to Claim 1, characterised in that they contain mono- or polybasic thiocarboxylic acids containing 2 to 18 C atoms per SH group, or ammonium salts or amides thereof.

4. Moulding compositions according to Claim 1, characterised in that they contain araliphatic mercaptans containing one or more SH groups and 2 to 18 C atoms per SH group or ammonium salts thereof.

5. Moulding compositions according to Claim 1, characterised in that they contain mononuclear or polynuclear aromatic mercaptans containing one or more SH groups.

**Revendications**

1. Matières à mouler thermoplastiques stabilisées contre la dégradation par thermolyse et à faible teneur en monomères résiduels, à base d'acrylonitrile, de styrène (ou d'alpha-méthylstyrène) et de caoutchoucs, caractérisées en ce qu'elles contiennent de 0,01 à 10% en poids (par rapport au poids total) de composés choisis parmi les alkylmercaptans, les mercaptans araliphatiques, les mercaptans aromatiques, les mercaptans hétérocycliques, les acides thiocarboxyliques et les produits d'addition d'épisulfures sur des polyols, des polyphénols ou des amines aliphatiques, contenant chacun 1 à 18 atomes de carbone par groupe SH.

2. Matières à mouler selon la revendication 1, caractérisées en ce qu'elles contiennent des monomercaptans aliphatiques en $C_1$–$C_{18}$.

3. Matières à mouler selon la revendication 1, caractérisées en ce qu'elles contiennent des acides thiocarboxyliques mono- ou poly-valents contenant 2 à 18 atomes de carbone par groupe SH, leurs sels d'ammonium ou amides.

4. Matières à mouler selon la revendication 1, caractérisées en ce qu'elles contiennent des mercaptans araliphatiques contenant un ou plusieurs groupes SH et 2 à 18 atomes de carbone par groupe SH, ou leurs sels d'ammonium.

5. Matières à mouler selon la revendication 1, caractérisées en ce qu'elles contiennent des mercaptans aromatiques mono- ou poly-cycliques à un ou plusieurs groupes SH.